# EUROPÄISCHE PATENTANMELDUNG

(11) **EP 1 431 251 A2**
(43) Veröffentlichungstag der Anmeldung: **23.06.2004**
(21) Anmeldenummer: 03022327.5
(22) Anmeldetag: 04.10.2003
(51) Int. Cl.: C02F 3/04

(54) **Kläranlage mit einem Tropfkörpersystem**

(30) Priorität: 20.12.2002 DE 20220020 U
(71) Anmelder: Hörster Betonwerk GmbH, 33790 Halle/Westfalen (DE)
(72) Erfinder: Habighorst, Stefan, 48231 Warendorf (DE)
(74) Vertreter: TER MEER STEINMEISTER & PARTNER GbR

(57) **Zusammenfassung**

Kläranlage mit einem Tropfkörper-Behälter (12), der ein Tropfkörperbett (58), einen Sumpf (60) am Boden des Behälters und eine Pumpeinrichtung zur wenigstens teilweisen Rückführung des Wassers von dem Sumpf (60) auf das Tropfkörperbett (58) umfaßt, dadurch **gekennzeichnet,** dass im Bereich des Sumpfes (60) eine von diesem durch eine Wand (66) mit reduzierten Durchlässen (84) oder einem Überlauf abgeteilte Sammelkammer (68) vorgesehen ist und dass in der Sammelkammer eine schwimmergesteuerte Pumpe (62) der Pumpeinrichtung angeordnet ist.

## Beschreibung

Die Erfindung betrifft eine Kläranlage mit einem Tropfkörper-Behälter, der ein Tropfkörperbett, einen Sumpf am Boden des Behälters und eine Pumpeinrichtung zur wenigstens teilweisen Rückführung des Wassers von dem Sumpf auf das Tropfkörperbett umfaßt.

Tropfkörper werden insbesondere in Kleinkläranlagen eingesetzt, die vor allem im Außenbereich oder in Gebieten verwendet werden, in denen ein Anschluß an die öffentliche Kanalisation nicht möglich oder zumindest unverhältnismäßig aufwendig wäre. Der Begriff des Tropfkörpers im hier verwendeten Sinn soll in einigen Anlagen verwendete Filterkörper oder Mischungen aus beiden einschließen. Wesentliche Bestandteile einer Kleinkläranlage der hier interessierenden Art sind zwei in den Boden einzulassende Behälter, nämlich ein Vorklärbehälter mit einer oder mehreren Kammern, in der sich feste Schmutzbestandteile am Boden absetzen, und ein anschließender Tropfkörper-Behälter, in dem sich ein Tropfkörper, z. B. aus Lavaasche, befindet, der eine besonders große Oberfläche im Verhältnis zu seinem Gesamtvolumen bietet und auf der sich ein sogenannter biologischer Rasen aus Mikroorganismen bilden kann. Im vorliegenden Zusammenhang geht es um einen speziellen Aspekt im Bereich des Tropfkörpers, so dass sich die weitere Beschreibung auf den Tropfkörper-Behälter beschränken soll.

Der Tropfkörper oder das Tropfkörperbett befindet sich bei einem z. B. zylindrischen Tropfkörper-Behälter auf einer ringförmigen Fläche, die sich an der Innenwand des Behälter entlang erstreckt, und wird oberhalb des Behälterbodens durch eine wasserdurchlässige Stützfläche abgestützt. Unterhalb des Tropfkörpers entsteht somit ein Sumpf, in dem das durch den Tropfkörper hindurchgelaufene Wasser gesammelt wird. Bei Anlagen üblicher Bauart wird in diesem Sumpf eine Tauchpumpe, z. B. mit Schwimmersteuerung, installiert, die über ein Steigrohr das gesammelte Wasser auf das Tropfkörperbett und gegebenenfalls teilweise bereits zum Auslaß abgibt. Bei einer bekannten Ausführungsform werden beispielsweise 80 % des Wassers zurück auf das Tropfkörperbett transportiert, während jeweils 20 % nach außen in den Vorfluter abgegeben werden.

Bei einer derartigen Verteilung kann davon ausgegangen werden, dass das zu klärende Wasser im Durchschnitt fünf mal über den Tropfkörper herabrieselt und dabei mit den auf der Tropfkörperfüllung ausgebildeten Mikroorganismen in Berührung kommt.

Für die Rückführung des Wassers auf den Tropfkörper wird üblicherweise eine Pumpeneinrichtung verwendet, die eine in dem Sumpf stehende Tauchpumpe mit Schwimmersteuerung umfaßt, von der ein nach oben verlaufendes Rohr ausgeht, das sich oberhalb des Tropfkörpers in einem T-Stück in Richtung Tropfkörper einerseits und Auslaß andererseits verzweigt. Tauchpumpen mit Schwimmersteuerung ermöglichen nur eine relativ grobe Regelung. Sie bleiben ausgeschaltet, bis das Wasser im Sumpf einen höchsten Füllstand erreicht hat, und pumpen das Wasser nach oben, bis fast alles Wasser abgepumpt ist. Diese relativ grobe Regelung hat den Vorteil, dass es nicht zu einem nervösen Ein und Ausschalten der Pumpe kommt. Sie hat jedoch die Konsequenz, dass beim Abpumpen des Sumpfes ein beträchtlicher Wasserschwall auf den Tropfkörper gelangt, der zu einem großen Teil rasch durch den Tropfkörper hindurchläuft, ohne dass eine ausreichende Kontaktaufnahme zwischen den Mikroorganismen und dem Wasser möglich ist.

Der Wasserschwall könnte zwar reduziert werden durch Verwendung einer Pumpe geringerer Förderleistung. Eine derartige Pumpe müßte jedoch zumindest bei stärkerem Abwasseranfall nahezu kontinuierlich laufen, ohne dass nennenswerte Ruhephasen eintreten könnten. Erwünscht ist jedoch ein ständiger Wechsel von Pump-phasen und Ruhephasen, so dass sich in den Ruhephasen der eigentliche Klärvorgang vollziehen kann.

Eine in diesem Sinn optimale Steuerung des Pumpvorganges könnte ohne weiteres durch eine geeignete Regelung erreicht werden, jedoch würde diese erhebliche Kosten verursachen und Wartungaufwand mit sich bringen.

Der Erfindung liegt daher die Aufgabe zugrunde, eine Kläranlage der obigen Art zu schaffen, die es ohne Verwendung einer elektronischen Regeleinrichtung ermöglicht, das im Sumpf des Tropfkörper-Behälters gesammelte Wasser in kurzen Pumpphasen auf den Tropfkörper zurückzubefördern und einen Wechsel von Pump- und Ruhephasen sicherzustellen.

Diese Aufgabe wird erfindungsgemäß bei einer Kläranlage der obigen Art dadurch gelöst, dass im Bereich des Sumpfes eine von diesem durch eine Wand mit reduzierten Durchlässen oder einem Überlauf abgeteilte Sammelkammer vorgesehen ist und dass in der Sammelkammer eine schwimmergesteuerte Pumpe der Pumpeinrichtung angeordnet ist.

Bei einer derartigen Ausführung dringt das im Sumpf gesammelte Wasser durch die reduzierten Durchlässe oder über den Überlauf nur mit Verzögerung in die Sammelkammer ein. Wenn die Sammelkammer bis zum maximalen Füllstand gefüllt ist, wird das Wasser nach oben abgepumpt, während die weitaus größere Wassermenge in dem Sumpf zurückbleibt. Erst wenn das Wasser durch die reduzierten Durchlässe oder über den Überlauf die Sammelkammer wieder gefüllt hat, wird ein weiterer Teil des Wassers abgepumpt. Es kommt also zu einem ständigen Wechsel von Zufuhr einer geringen Wassermenge und Ruhephase. Auf diese Weise werden optimale Betriebsbedingungen erreicht.

Bei sehr starkem Wasseranfall kann das Wasser über die Wand hinweg ohne Verzögerung direkt in die Sammelkammer eintreten. Es ist auch möglich, anstelle der Durchlässe auch für den Normalbetrieb einen Überlauf zu verwenden. der entweder durch den gesamten oberen Rand der Wand oder auch durch eine oder mehrere Einsenkungen des oberen Randes gebildet sein kann. Die Verwendung von Durchlässen in der Wand im möglichst weit unten liegenden Bereich haben jedoch den Vorteil, dass Wasser abgepumpt wird, das einen für den gesamten Sumpf repräsentativen oder sogar erhöhten Schlammanteil aufweist und dass der Schlamm nicht im wesentlichen im Sumpf außerhalb der Sammelkammer zurückbleibt.

Bei einem ringförmig ausgebildeten Tropfkörper ist vorzugsweise oberhalb des Tropfkörpers eine ringförmige Verteilerrinne mit radial nach außen austretenden Austrittsrohre vorgesehen.

Weitere Vorteile und Merkmale der Erfindung ergeben sich aus den Unteransprüchen.

Im folgenden werden bevorzugte Ausführungsbeispiele der Erfindung anhand der beigefügten Zeichnung näher erläutert.
- Fig. 1: ist ein senkrechter Schnitt durch eine erfindungsgemäße Kläranlage;
- Fig. 2: ist ein Querschnitt zu Fig. 1.

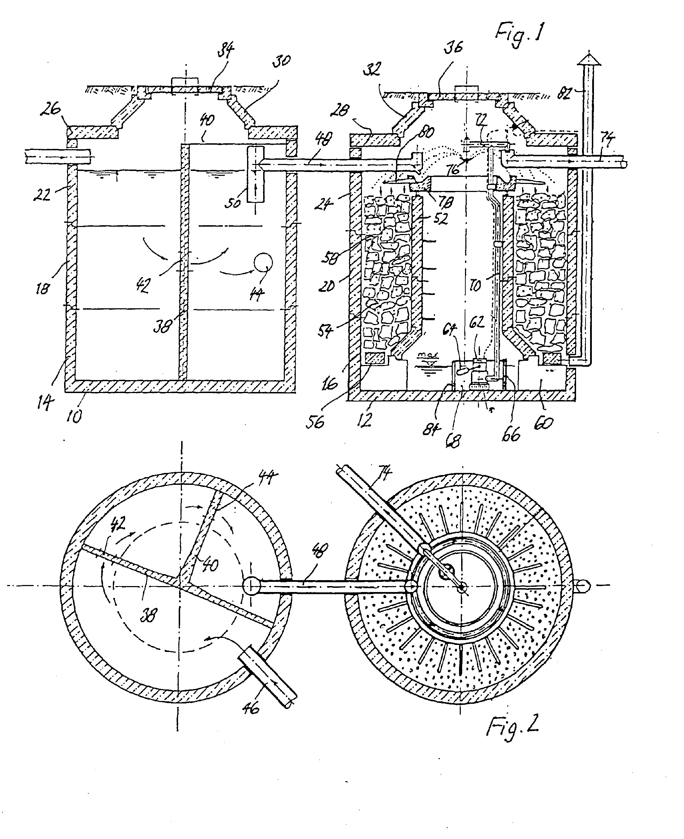

In Fig. 1 und 2 sind ein Vorklärbehälter 10 und Tropfkörper-Behälter 12 gezeigt. Beide Behälter sind entsprechend der üblichen Bauart als zylindrische Behälter aus einer zylindrischen Bodenwanne 14,16 und zwei auf diese aufgesetzten Betonringen 18,20,22,24 zusammengesetzt. Den oberen Abschluß bildet ein ringförmiger Deckel 26,28, auf den ein konischer Dom 30,32 aufgesetzt ist, dessen obere Öffnung durch einen heraushebbaren Deckel 34,36 verschließbar ist.

Behälter dieser Art sind auf dem Markt verbreitet und lassen sich in einfacher Weise aus Beton-Fertigteilen zusammensetzen. Die Höhe kann durch Auswahl der Anzahl und der Höhe der zusammengesetzten Betonringe variiert werden. Die Erfindung ist jedoch auf Behälter anderer Art ebenso anwendbar. Dies gilt beispielsweise auch für Behälter, die in einem Stück aus Kunststoff hergestellt sind.

Der Vorklärbehälter 10 kann durch senkrechte Wände 38,40 in zwei oder drei Kammern unterteilt sein. Die Unterteilung kann entsprechend derjenigen der früher üblichen Dreikammergruben erfolgen, indem eine Wand 38 den Innenraum des Zylinders halbiert, während eine Wand 40 eine der Hälften in zwei Viertel unterteilt, wie es in Fig. 2 gezeigt ist. In den Wänden befinden sich bei der vorliegenden Anwendung Durchlässe 42,44, die es gestatten, dass das Wasser von dem Zulauf 46 zu dem Überlauf 48 strömen kann. Am Einlaß des Überlauf-Rohres befindet sich ein Tauchrohr 50, durch das verhindert wird, dass Oberflächenschmutz durch den Überlauf austreten kann. Das Überlaufrohr 48 transportiert das überlaufende Wasser in den anschließenden Tropfkörper-Behälter 12.

Im Inneren des Tropfkörper-Behälters befindet sich ein ringförmiger, konzentrischer Einsatz 52, der ebenfalls aus mehreren nicht bezeichneten Teilen aufeinandergesetzt sein kann. Der Einsatz 52 bildet zusammen mit der nicht im einzelnen bezeichneten Außenwand des Tropfkörper-Behälters einen Ringraum 54, der am unteren Ende in Abstand zu der Bodenfläche der Betonwanne 16 durch eine wasserdurchlässige Boden-Konstruktion 56 abgeschlossen ist.

Auf dieser Bodenkonstruktion 56 befindet sich ein Tropfkörperbett 58, insbesondere aus Lavaasche.

Unterhalb des Tropfkörpers wird auf diese Weise ein Sumpf 60 gebildet. In diesem Sumpf steht eine Tauchpumpe 62 mit einem Schwimmerschalter, dessen Schwimmer 64 in der Zeichnung gezeigt ist. Die Tauchpumpe 62 befindet sich innerhalb einer umlaufenden, beispielsweise kreisrunden oder anderweitig geformten Wand 66, die innerhalb des Sumpfes eine Sammelkammer 68 abteilt. Die Wand 66 ist geringfügig höher als der vorgesehene maximale Wasserstand im Sumpf, der in der Zeichnung angegeben ist und bei dem die Pumpe einschaltet.

Von der Tauchpumpe 62 geht ein nach oben verlaufendes Rohr 70 aus, das sich in einem T-Stück 72 nach links und rechts verzweigt. Der nicht bezeichnete rechte Arm mündet in einen Auslauf 74 und damit in den nicht gezeigten Vorfluter. Der linke Arm mündet oberhalb einer in der senkrechten Mittelachse des Tropfkörper-Behälters befindliche Verteilerschale 76, durch die das herablaufende Wasser ringförmig verteilt wird. Auf dem inneren Einsatz 52 stützt sich eine ringförmige Verteilerrinne 78 ab, von der Verteilerrohre 80 nach allen Seiten radial ausgehen. Auf diese Weise wird das auf dem T-Stück 72 herabfallende Wasser durch die Verteilerschale 76 teilweise direkt auf das Tropfkörperbett 58, teilweise über die ringförmige Verteilerrinne 78 und die Verteilerrohre 80 auf das Tropfkörperbett 58 abgegeben, so dass eine möglichst gleichmäßige Verteilung auf die gesamte Oberfläche erreicht wird. Auf der in Fig. 1 und 2 rechten Seite des Tropfkörper-Behälters 12 in Fig. 1 und 2 befinden sich ein oder mehrere aufsteigende Be- und Entlüftungsrohre 82, das von der im Bereich der unteren Bodenkonstruktion der Tropfkörper ausgeht und oberhalb der Erdoberfläche mündet.

Anschließend soll noch einmal auf die Sammelkammer 68 eingegangen werden, die wesentliches Merkmal der vorliegenden Erfindung ist. Die Sammelkammer 68 ist mithilfe von reduzierten Durchlässen 84 in der Wand 66 mit dem umgebenden Sumpf verbunden. Die reduzierten Durchlässe lassen nur eine begrenzte Wassermenge pro Zeit von dem umgebenden Sumpf in die Sammelkammer eintreten.

Wenn auf diese Weise nach einer bestimmten Zeit die Sammelkammer gefüllt ist, wird die Tauchpumpe 62 eingeschaltet, und sie pumpt den innerhalb der Sammelkammer vorhandenen Wasservorrat im wesentlichen vollständig ab. Dagegen wird nicht, wie bisher üblich, der gesamte in dem Sumpf enthaltene Wasservorrat in einem Zuge abgepumpt. Durch das erfindungsgemäß mögliche Abpumpen des herabrieselnden Wassers in kleinen Schüben mit zwischengeschalteten Ruhephasen wird gewährleistet, dass das Wasser innerhalb des Tropfkörpers in besonderer Weise wirksam geklärt wird.

Die Sammelkammer mit deren Wänden kann unmittelbar einstückig an den Behälterboden angeformt sein, gegebenenfalls also auch durch Beton gebildet sein. Eine sehr einfache Lösung besteht jedoch darin, auf den Boden des Behälters einen oben offenen Kunststoffkasten mit Durchlässen oder Überlauf zu befestigen. Wenn der Behälter aus Kunststoff besteht, kann die Sammelkammer auch direkt an dem Boden angeformt sein. Bei Betonbehältern besteht die Möglichkeit, einen vorgefertigten Betonring auf dem Behälterboden mithilfe von Mörtel zu befestigen.

## Patentansprüche

1. Kläranlage mit einem Tropfkörper-Behälter (12), der ein Tropfkörperbett (58), einen Sumpf (60) am Boden des Behälters und eine Pumpeinrichtung zur wenigstens teilweisen Rückführung des Wassers von dem Sumpf (60) auf das Tropfkörperbett (58) umfaßt, **dadurch gekennzeichnet, dass** im Bereich des Sumpfes (60) eine von diesem durch eine Wand (66) mit reduzierten Durchlässen (84) oder einem Überlauf abgeteilte Sammelkammer (68) vorgesehen ist und dass in der Sammelkammer eine schwimmergesteuerte Pumpe (62) der Pumpeinrichtung angeordnet ist.

2. Kläranlage nach Anspruch 1, **dadurch gekennzeichnet, dass** die Durchlässe (84) im unteren Bereich der Wand (66) angeordnet sind.

3. Kläranlage nach Anspruch 1 oder 2, **dadurch gekennzeichnet, dass** der Tropfkörper-Behälter (12) zylindrisch ausgebildet ist und dass ein ringförmiges Tropfkörperbett (58) entlang der inneren Wand des Tropfkörper-Behälters vorgesehen ist.

4. Kläranlage nach einem der Ansprüche 1 bis 3, **dadurch gekennzeichnet, dass** die Pumpe (62) auf der Auslaßseite mit einem senkrecht aufsteigenden Rohr (70) verbunden ist, an dessen oberem Ende sich ein Mengenteiler befindet, der die Wassermengen zwischen einem Auslauf (74) und der Oberseite des Tropfkörperbettes verteilt.

5. Kläranlage nach Anspruch 4, **dadurch gekennzeichnet, dass** der Mengenteiler ein T-Stück (72) ist, das mit einem Arm zu dem Auslauf (74) und mit dem anderen Arm in Richtung des Tropfkörperbettes (58) gerichtet ist.

6. Kläranlage nach Anspruch 4 oder 5, **dadurch gekennzeichnet, dass** die Pumpe auf der Auslaßseite mit einem senkrecht aufsteigenden Rohr (70) verbunden ist, das über ein T-Stück (72) zu einem Auslauf (74) einerseits und zur Oberseite des Tropfkörperbettes (58) andererseits führt.

7. Kläranlage nach Anspruch 6, **dadurch gekennzeichnet, dass** der nach innen gerichtete Arm des T-Stücks (72) oberhalb einer Verteilerschale (76) mündet, die das herabfallende Wasser bogenförmig auf dem Umkreis oberhalb des Tropfkörperbettes (58) verteilt.

8. Kläranlage nach Anspruch 7, **dadurch gekennzeichnet, dass** die Sammelkammer (68) durch einen auf dem Boden des Tropfkörper-Behälters (12) befestigten Kunststoff-Behälter gebildet wird.

9. Kläranlage nach Anspruch 7, **dadurch gekennzeichnet, dass** die Sammelkammer (68) durch einen vorgefertigten, mit Durchlässen versehenen, auf dem Behälterboden mithilfe von Mörtel befestigten Betonringen gebildet wird.
